# EUROPÄISCHE PATENTANMELDUNG

(11) **EP 4 703 876 A1**
(43) Veröffentlichungstag der Anmeldung: **04.03.2026**
(21) Anmeldenummer: 24197164.7
(22) Anmeldetag: 29.08.2024
(51) Int. Cl.: G06F 9/451, G06F 8/33, G06F 11/30, G06F 11/34, G06N 20/00

(54) **COMPUTERIMPLEMENTIERTES VERFAHREN ZUR UNTERSTÜTZUNG VON SOFTWAREENTWICKLERN BEI DER KODIERUNG INNERHALB EINER ENTWICKLUNGSUMGEBUNG ZUR KODIERUNG EINER ANWENDUNG UNTER VERWENDUNG VON EXTERNEN ANWENDUNGSPROGRAMMIERSCHNITTSTELLEN UND ANWENDUNGSPROGRAMMIERSCHNITTSTELLEN-, API-, SERVER**

(71) Anmelder: Siemens Aktiengesellschaft, 80333 München (DE)
(72) Erfinder: Bäuml, Daniel, 92348 Berg bei Neumarkt in der Oberpfalz (DE); Fries, Edgar, 91077 Neunkirchen am Brand (DE)
(74) Vertreter: Siemens Patent Attorneys

(57) **Zusammenfassung**

Ein Anwendungsprogrammierschnittstellen-, API-, Server, der ein API-Gateway und mindestens eine API umfasst, die eine Vielzahl von aufrufbaren API-Endpunkten umfasst, und ein Verfahren dazu, wobei der Server weiterhin umfasst: einen API-Monitor, der so konfiguriert ist, dass er API-Aufrufdaten abruft, die sich auf API-Aufrufe beziehen, die von einem Client an einen oder mehrere API-Endpunkte einer oder mehrerer APIs getätigt wurden, um jeden API-Aufruf in den abgerufenen API-Aufrufdaten mit einem Zeitstempel zu versehen, die mit einem Zeitstempel versehenen API-Aufrufdaten an ein Datenspeichersystem zu senden; das Datenspeichersystem, der so konfiguriert ist, dass es die empfangenen, mit einem Zeitstempel versehenen API-Aufrufdaten speichert; einen künstliches Intelligenz, Kl-,Kopilot en, der so konfiguriert ist, dass er unter Verwendung der in dem Datenspeicher gespeicherten Daten trainiert wird und in einer Entwicklungsumgebung verwendet werden kann, um dem Benutzer Vorschläge für die Erstellung von Code für eine neue Anwendung zu machen.

## Beschreibung

### Technischer Bereich

Die vorliegende Erfindung bezieht sich auf das Gebiet der Softwareentwicklung, insbesondere auf ein System und ein Verfahren zur Verbesserung des Entwicklungsprozesses von Softwareanwendungen, die von externen Anwendungsprogrammierschnittstellen (APIs) Gebrauch machen. Insbesondere konzentriert sich die vorliegende Erfindung auf die Bereitstellung eines verbesserten Entwicklungswerkzeugs, das in der Lage ist, einem Benutzer genau zu helfen, indem es einen intelligenten Entwicklungs-Copiloten vorschlägt, der die API-Mustererkennung nutzt, um Entwickler bei der Erstellung optimaler API-Sequenzen und Arbeitsabläufe innerhalb ihrer gewählten Entwicklungsumgebung zu unterstützen.

### Hintergrund

In modernen Softwaresystemen interagieren Entwickler oft mit verschiedenen Funktionalitäten über Anwendungsprogrammierschnittstellen (APIs). Diese APIs ermöglichen es Entwicklern, Funktionen auf modulare Weise zu kapseln und sie zugänglich zu machen, ohne den zugrunde liegenden Quellcode offenzulegen. Diese Modularität ist ein Eckpfeiler von Software-Ökosystemen und ermöglicht die Erstellung und Integration komplexer Anwendungen über verschiedene Plattformen und Dienste hinweg.

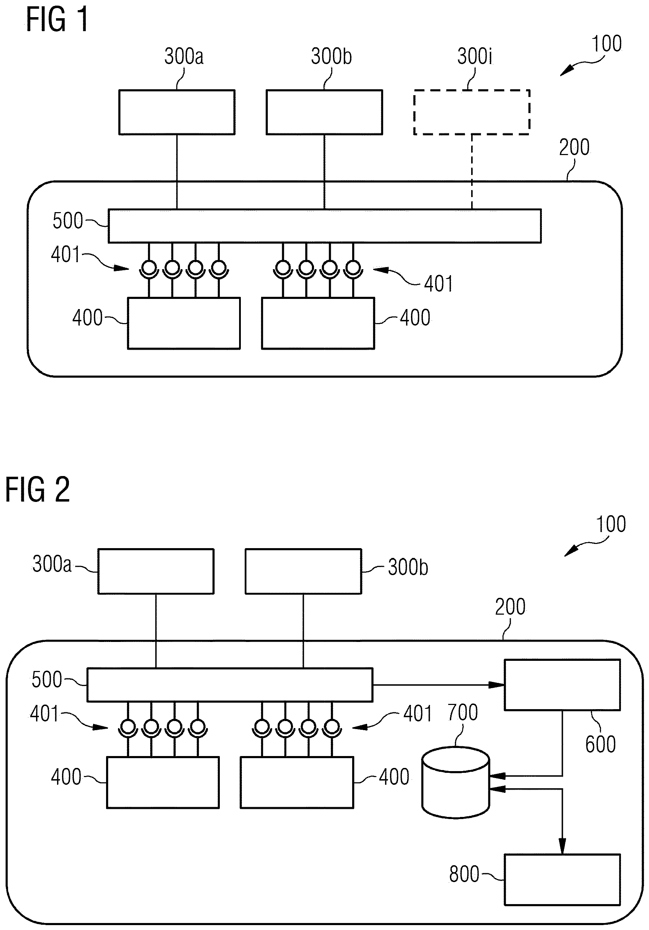

FIG 1 ist eine schematische Darstellung eines API-Ökosystems nach dem Stand der Technik.

In API-Umgebungen gibt es in der Regel zwei Hauptrollen: die Rolle der API-Anbieter, die die API entwickeln und den Zugriff darauf kontrollieren, und die Rolle der API-Konsumenten/Clients, die die Funktionalitäten der API in ihren eigenen Softwareanwendungen nutzen, ohne die API selbst ändern zu können.

In einer typischen Konfiguration umfasst das API-Ökosystem oder die Entwicklungsumgebung 100 einen Server 200 und einen oder mehrere Clients 300a, 300b, ... 300i. Der Server 200 stellt die API-Funktionen zur Laufzeit bereit, während eine clientseitige Softwareanwendung diese Funktionen nutzt, indem sie von einer API 400a oder 400b die entsprechenden Endpunkte 401 (a bis d oder e bis h) aufruft, die für die Durchführung einer Aufgabe erforderlich sind.

Der Server umfasst einen API-Gateway 500 und eine oder mehrere APIs 400. Der API-Gateway 500 vermittelt zwischen dem Server 200 und den Clients 300 und verwaltet die Aufrufe der API-Endpunkte 401 durch die Clients 300. Jeder API-Endpunkt 401a bis 401h ist eine diskrete Funktionalität in einer API 400, und eine Sammlung solcher funktional verwandten Endpunkte bildet eine API 400.

Trotz ihrer weiten Verbreitung stoßen Entwickler bei der Arbeit mit APIs von Drittanbietern häufig auf erhebliche Herausforderungen. Diese Herausforderungen werden noch verschärft, wenn eine API unzureichend dokumentiert ist, von Standardkonventionen abweicht oder eine komplexe Abfolge von Endpunktaufrufen erfordert, um bestimmte Arbeitsabläufe zu realisieren. Entwickler, die mit der betreffenden API nicht vertraut sind, müssen erhebliche Anstrengungen unternehmen, um diese Endpunkte zu verstehen und effektiv zu nutzen, insbesondere wenn die Dokumentation fehlt oder unklar ist.

Folgende Probleme treten typischerweise auf:
- Unzureichende Dokumentation: APIs sind möglicherweise nicht gründlich dokumentiert, so dass Entwickler nicht genau wissen, wie sie die verfügbaren Endpunkte effektiv nutzen können.
- Nicht standardisierte Implementierungen: APIs halten sich möglicherweise nicht an allgemein akzeptierte Standards und Konventionen, was zu Verwirrung und Fehlern bei der Integration führt.
- Komplexe Workflow-Anforderungen: Um bestimmte Arbeitsabläufe zu implementieren, müssen Entwickler eine Reihe von API-Endpunkten in einer bestimmten Reihenfolge aufrufen. Die Bestimmung der richtigen Reihenfolge und das Verständnis der Daten, die zwischen diesen Endpunkten weitergegeben werden müssen, sind oft nicht gut dokumentiert, was die Aufgabe eines Entwicklers extrem beschwerlich macht.
- Fehlen von Beispielcode: Möglicherweise gibt es keinen Beispielcode, der die praktische Verwendung der API demonstriert, so dass die Entwickler experimentieren und möglicherweise Fehler bei ihren Implementierungen machen müssen.
- Entwicklungsaufwand und -zeit: Die Komplexität der korrekten Abfolge von API-Endpunktaufrufen erhöht die Entwicklungszeit und -arbeit. Entwickler müssen die API-Dokumentation manuell durchsuchen oder durch Ausprobieren funktionale Workflows zusammenstellen.

Um diese Probleme zu lösen, müssen die Entwickler in der Regel einen intensiven manuellen Prozess durchlaufen. Sie müssen die verfügbare Dokumentation sorgfältig durchlesen oder sich im besten Fall an den API-Anbieter wenden, um zusätzliche Hinweise zu erhalten. Wenn die Dokumentation unzureichend ist und keine programmatischen Beispiele bereitgestellt werden, wird die Aufgabe des Entwicklers noch schwieriger und fehleranfälliger.

Darüber hinaus wurden einige Software-Entwicklungstools vorgeschlagen, darunter KI-basierte Kopiloten, die ein gewisses Maß an Unterstützung bieten, indem sie den vorhandenen Code analysieren und mögliche Ergänzungen oder Verbesserungen vorschlagen. Diese Kopiloten wurden an einer großen Menge von verfügbarem Quellcode trainiert, um Muster im Code zu erkennen, die den Entwicklern dann beim Schreiben des Codes vorgeschlagen werden können.

Allerdings sind diese Tools in ihrem Ansatz begrenzt, da sie sich auf eine eher statische Analyse stützen, die sich nur auf den Quellcode konzentriert und das dynamische Laufzeitverhalten von Anwendungen oder die Abfolge von API-Aufrufen von Endpunkten, die für die Implementierung bestimmter Arbeitsabläufe erforderlich sind, nicht berücksichtigt. Diese statische Analyse geht dann nicht auf die Feinheiten der Verwendung von APIs in realen Szenarien ein, zumal die Reihenfolge der Endpunktaufrufe ein wichtiger Aspekt für das ordnungsgemäße Funktionieren einer Softwareanwendung ist, die externe APIs verwendet.

Eine typische Softwareanwendung könnte zum Beispiel einen Arbeitsablauf (so benannten Workflow) wie "ein Produkt kaufen" implementieren, der die folgende Abfolge von API-Endpunktaufrufen beinhaltet:
Aufruf Endpunkt 1.1: Benutzerauthentifizierung und -autorisierung.
Aufruf von Endpunkt 2.1: Produktsuche.
Aufruf von Endpunkt 2.3: Abrufen der Produktbeschreibung.
Endpunkt 2.1 aufrufen: Produkt in den Warenkorb legen.
Endpunkt 2.4 aufrufen: Zahlung abwickeln.
Endpunkt 1.2 aufrufen: Abmelden.

In diesem Arbeitsablauf muss jeder Endpunkt in einer genauen Reihenfolge aufgerufen werden, damit der Arbeitsablauf erfolgreich abgeschlossen werden kann. Die oben erwähnten aktuellen Entwicklungstools, die bestehende KI-Copiloten verwenden, bieten keine Mechanismen, die es ermöglichen, solche Sequenzen automatisch zu erkennen und den Entwicklern vorzuschlagen. Infolgedessen müssen die Entwickler diese Sequenzen immer noch manuell festlegen, was das Fehlerrisiko erhöht und den Entwicklungsprozess erheblich verlangsamt.

Angesichts dieser Herausforderungen besteht ein klarer Bedarf an einer Lösung, die über die statische Codeanalyse hinausgeht und Einblicke in die dynamischen Nutzungsmuster von APIs bietet. Eine solche Lösung würde es ermöglichen, Entwickler zu unterstützen, indem sie nicht nur statische Code-Quellmuster, sondern auch aus dem Laufzeitverhalten bestehender Softwareanwendungen lernt und automatisch die richtigen Sequenzen von API-Aufrufen zur Durchführung von Aufgaben oder Teilaufgaben identifiziert. Dies würde nicht nur die Entwicklungszeit und den Aufwand reduzieren, sondern auch die Zuverlässigkeit und Effizienz von Software verbessern, die mit externen APIs integriert ist.

Die vorliegende Erfindung zielt darauf ab, diese Anforderungen durch die Einführung eines neuen Kl-Kopiloten für die Entwicklung zu erfüllen, der aus dem dynamischen Laufzeitverhalten verschiedener Softwareanwendungen lernen kann. Dieser Kopilot kann die Reihenfolge, in der API-Endpunkte aufgerufen werden, beobachten, Muster, Sequenzen und Arbeitsabläufe erkennen und so Entwicklern diese Erkenntnisse direkt in ihrer Entwicklungsumgebung zur Verfügung stellen.

Diese Aufgabe wird erfindungsgemäß durch ein computerimplementiertes Verfahren zur Unterstützung von Softwareentwicklern bei der Codierung innerhalb einer Entwicklungsumgebung zur Codierung einer Anwendung unter Verwendung einer externen Anwendungsprogrammierschnittstelle, API, gemäß Anspruch 1 und/oder durch einen API-Server gelöst, der einen verbesserten KI-Kopiloten gemäß Anspruch 10 umfasst und dazu verwendet werden kann, die Durchführung des computerimplementierten Verfahrens zur Unterstützung von Softwareentwicklern bei der Codierung innerhalb einer Entwicklungsumgebung zu ermöglichen.

### Zusammenfassung der Erfindung

Die vorliegende Erfindung führt einen KI-Kopiloten für die Entwicklung ein, der künstliche Intelligenz (KI) einsetzt, um dynamisch aus dem Laufzeitverhalten verschiedener Softwareanwendungen zu lernen. Dieser Copilot ist so konzipiert, dass er die Abfolge der API-Endpunktaufrufe beobachtet, analysiert und versteht, die notwendig sind, um eine bestimmte Abfolge für die Ausführung von Teilaufgaben oder Workflows zur Durchführung komplexer Aufgaben zu implementieren.

Ein wichtiger Aspekt der vorgeschlagenen Lösung liegt in der Fähigkeit, kontextabhängige Unterstützung in Echtzeit direkt in der vom Entwickler gewählten Entwicklungsumgebung zu bieten. Wenn Entwickler an neuen Softwareanwendungen arbeiten, kann der vorgeschlagene verbesserte KI-Copilot die richtige Reihenfolge der API-Endpunktaufrufe sowie die entsprechenden notwendigen Codeschnipsel vorschlagen. Dies wird durch die Integration des Kopiloten in die Entwicklungsumgebung erreicht, in der er automatisch Quellcode-Schnipsel erzeugen kann, die diese Sequenzen implementieren. Entwickler können diesen Code mit minimalem Aufwand in ihre Projekte einfügen und so den Zeitaufwand für die Entwicklung APIgesteuerter Anwendungen erheblich reduzieren.

Da der Kopilot die Identifizierung der korrekten API-Aufrufsequenzen automatisiert, müssen die Entwickler nicht mehr manuell die Dokumentation durchsuchen oder mit verschiedenen Kombinationen von Endpunktaufrufen experimentieren. Dadurch wird der Entwicklungsprozess beschleunigt und die Fehlerwahrscheinlichkeit verringert, was zu zuverlässigeren und robusteren Softwareanwendungen führt. Darüber hinaus bedeutet die Fähigkeit des Kopiloten, aus den kumulativen Erfahrungen mehrerer Softwareanwendungen zu lernen, dass er sich im Laufe der Zeit kontinuierlich verbessert und immer genauere und relevantere Vorschläge macht, je mehr Daten er verarbeitet.

Vorteilhafte Konfigurationen und Entwicklungen ergeben sich aus den weiteren abhängigen Ansprüchen und aus der Beschreibung unter Bezugnahme auf die Figuren der Zeichnungen.

Gegebenenfalls können die oben genannten Konfigurationen, Entwicklungen und Implementierungen miteinander kombiniert werden, soweit dies sinnvoll ist. Weitere mögliche Ausgestaltungen, Entwicklungen und Ausführungsformen der Erfindung umfassen auch nicht ausdrücklich erwähnte Kombinationen von Merkmalen der Erfindung, die zuvor beschrieben wurden oder im Folgenden unter Bezugnahme auf die Ausführungsformen beschrieben werden. Insbesondere wird der Fachmann in diesem Fall auch einzelne Aspekte als Verbesserungen oder Ergänzungen der Grundform der vorliegenden Erfindung hinzufügen.

### Zeichnungen

Die vorliegende Erfindung wird im Folgenden anhand der in den schematischen Figuren der Zeichnungen dargestellten Ausführungsformen näher beschrieben, in denen:
- FIG 1: ist eine schematische Ansicht eines Systems gemäß dem Stand der Technik.
- FIG 2: ist eine schematische Ansicht eines Systems gemäß der vorliegenden Erfindung.
- FIG 3: ist ein Flussdiagramm eines Verfahrens gemäß der vorliegenden Erfindung.

Die beigefügten Zeichnungen sollen zum weiteren Verständnis der Ausführungsformen der Erfindung beitragen. Sie veranschaulichen Ausführungsformen und helfen in Verbindung mit der Beschreibung, Prinzipien und Konzepte der Erfindung zu erklären. Andere Ausführungsformen und viele der genannten Vorteile werden angesichts der Zeichnungen deutlich. Die Elemente in den Zeichnungen sind nicht unbedingt maßstabsgetreu dargestellt.

### Ausführliche Beschreibung

Der Hauptaspekt der vorliegenden Erfindung ist ein Framework für künstliche Intelligenz (KI), das dynamisch aus dem Laufzeitverhalten verschiedener Softwareanwendungen lernt. Dieser KI-gesteuerte Ansatz ermöglicht es dem Kopiloten, Entwickler zu unterstützen, indem er ihnen direkt in ihrer Entwicklungsumgebung optimale Empfehlungen für API-Workflows und - Sequenzen gibt. Das System besteht aus drei Schlüsselkomponenten: einem API-Monitor, einem Datenspeichersystem und dem KI-basierten Kopiloten.

Der Ansatz lässt sich in drei Phasen zusammenfassen. Die erste Phase bezieht sich auf die Datensammlung und -überwachung, bei der der API-Monitor kontinuierlich alle API-Interaktionen von Client-Anwendungen beobachtet und aufzeichnet. Zu diesem Zweck wird auf dem Server, der die API hostet, ein API-Monitor installiert, der jeden API-Aufruf aufzeichnet. Diese Aufrufe umfassen zumindest die Endpunkte, auf die zugegriffen wird, können aber auch die Abfolge der Aufrufe, die zwischen diesen Endpunkten übergebenen Daten und die Zeit zwischen diesen Interaktionen umfassen. Diese Daten werden dann mit einem Zeitstempel versehen und in einem Datenspeichersystem gespeichert. Die Zeitstempelung der API-Aufrufe ist wichtig, da sie es dem Kopiloten ermöglicht, die zeitlichen Beziehungen zwischen verschiedenen API-Aufrufen zu analysieren, was für das Verständnis und die Identifizierung von Mustern in der API-Nutzung entscheidend ist.

Die zweite Phase ist die Mustererkennung und das Lernen, bei dem die im Datenspeichersystem gespeicherten Daten verwendet werden, um die KI zu trainieren, Muster in den API-Aufrufen zu erkennen, wobei der Schwerpunkt auf Sequenzen liegt, die wiederholt von verschiedenen Client-Anwendungen oder sogar innerhalb derselben Anwendung ausgeführt werden. Der Lernprozess kann kontinuierlich erfolgen, d.h. ein KI Kopilot kann regelmäßig anhand neuer, vom API-Monitor gesammelter Daten neu trainiert werden. Ein solches kontinuierliches Training ermöglicht es dem System, sein Verständnis dafür zu verfeinern, wie verschiedene APIs in realen Szenarien verwendet werden, was wiederum die Genauigkeit und Relevanz der Vorschläge erhöht, die der Kopilot nach dem Einsatz in einer Entwicklungsumgebung macht. Es ist wichtig, noch einmal zu betonen, dass das Training nicht nur statischen Code analysiert, sondern durch die Verwendung von Timing-Informationen in das dynamische Laufzeitverhalten von Anwendungen eindringt, was es bei der Identifizierung nützlicher Sequenzen und Arbeitsabläufe sehr viel effektiver macht.

In der dritten Phase, der Anwendung des erlernten Wissens, verwendet der Kopilot die erlernten Sequenzen und Arbeitsabläufe, um Entwickler in Echtzeit zu unterstützen. Wenn ein Entwickler in seiner Entwicklungsumgebung Code schreibt, kann der Kopilot die richtige Abfolge von API-Endpunktaufrufen vorschlagen, die für eine bestimmte Teilaufgabe und komplexe Aufgabe erforderlich ist. Diese Vorschläge sind kontextabhängig und berücksichtigen die spezifische API und die verwendete Entwicklungssprache. Der Kopilot kann darüber hinaus automatisch Quellcode-Schnipsel generieren, die diese Sequenzen implementieren und die die Entwickler dann direkt in ihr Projekt einfügen können.

FIG 2 ist eine schematische Ansicht eines Systems gemäß der vorliegenden Erfindung.

Der linke Teil von FIG 2 zeigt Elemente, die denen des Standes der Technik ähneln, und wir verweisen auf die Beschreibung von FIG 1 oben. Das vorgeschlagene API-Ökosystem umfasst außerdem einen API-Monitor 600, ein Datenspeichersystem 700 und einen verbesserten Kl-Kopiloten 800. Diese drei neuen Komponenten arbeiten zusammen, um den Kopiloten mit API-Nutzungsdaten zu sammeln, zu speichern und zu trainieren. Dies ermöglicht die Entwicklung intelligenter, kontextbezogener Unterstützung für Entwickler, die APIs in ihre Anwendungen integrieren, gemäß dem oben beschriebenen Konzept.

Der API-Monitor 600 ist auf dem Server 200 installiert, um die Interaktionen zwischen den APIs 400 im Server 200 (insbesondere die Aufrufe der API-Endpunkte 401) und den Clients 300, die diese nutzen, aufzuzeichnen. Er ist dafür verantwortlich, detaillierte Informationen über jeden API-Aufruf einer Client-Anwendung zu erfassen, einschließlich des spezifischen Endpunkts, auf den zugegriffen wird, und optional der Reihenfolge der Aufrufe, der zwischen diesen Endpunkten übergebenen Daten und des Zeitplans dieser Interaktionen. Der API-Monitor 600 stellt sicher, dass jeder API-Aufruf mit einem Zeitstempel versehen und im Datenspeichersystem 700 in einem Format gespeichert wird, das eine einfache Abfrage und Analyse ermöglicht. Wie bereits erwähnt, ist dieser Zeitstempel von entscheidender Bedeutung, da er es dem System ermöglicht, die zeitlichen Beziehungen zwischen verschiedenen API-Aufrufen zu analysieren, was für das Verständnis des Ablaufs von Operationen innerhalb einer Softwareanwendung unerlässlich ist, um die Abläufe und Workflows zu erlernen. Die vom API-Monitor 600 gesammelten Daten werden dann an das Datenspeichersystem 700 zur langfristigen Speicherung und weiteren Verarbeitung weitergeleitet.

Das Datenspeichersystem 700 ist das Repository, in dem alle vom API-Monitor 600 erfassten Daten gespeichert werden. Es spielt eine zentrale Rolle bei der Pflege einer umfassenden Datenbank von API-Interaktionen, die die KI des Systems später analysieren kann. Das Datenspeichersystem 700 ist so konzipiert, dass er große Datenmengen effizient verarbeiten kann. Es stellt sicher, dass alle aufgezeichneten API-Interaktionen, einschließlich des Zeitpunkts und der Reihenfolge der Aufrufe, sicher gespeichert und für einen einfachen Zugriff organisiert werden. Das Datenspeichersystem 700 speichert nicht nur die gestempelten Rohdaten des API-Gateways 500, sondern kann auch die Nutzungsmuster und Arbeitsabläufe / Workflows archivieren, die der Kl-Kopilot 800 während seiner Analyse und seines Trainings identifiziert hat.

Der verbesserte KI-Kopilot 800 ist das Herzstück des Systems. Er nutzt die im Datenspeichersystem 700 gespeicherten Daten, um aus den API-Interaktionen zu lernen, die vom API-Monitor 600 erfasst werden. Diese KI-gesteuerte Komponente ist für die Analyse der gespeicherten Daten verantwortlich, um Muster in der API-Nutzung zu erkennen, z. B. häufige Abfolgen von API-Endpunktaufrufen und die von verschiedenen Client-Anwendungen implementierten Arbeitsabläufe. Der KI-Kopilot 800 kann kontinuierlich mit neuen Daten trainiert werden, so dass er seine Vorschläge mit der Zeit anpassen und verbessern kann. Sobald die KI eine Sequenz oder einen Arbeitsablauf identifiziert hat, kann sie dieses Wissen im Datenspeichersystem 700 speichern und zur Unterstützung von Entwicklern in Echtzeit nutzen. Wenn ein Entwickler in seiner Entwicklungsumgebung arbeitet, kann der Kl-Kopilot 800 optimale Sequenzen von API-Aufrufen vorschlagen, relevante Codeschnipsel bereitstellen und sogar ganze Arbeitsabläufe/Workflows auf der Grundlage der erlernten Muster vorschlagen. Der Kl-Kopilot 800 kann sowohl mit dem API-Monitor 600, der die rohen Interaktionsdaten liefert, als auch mit dem Datenspeicher 700, der die historischen Daten liefert und die gelernten Muster für die zukünftige Verwendung speichert, interagieren. Dieses vernetzte System stellt sicher, dass der KI-Kopilot 800 immer auf dem neuesten Stand ist und die Entwickler bei der komplexen Aufgabe der API-Integration höchst effektiv unterstützt.

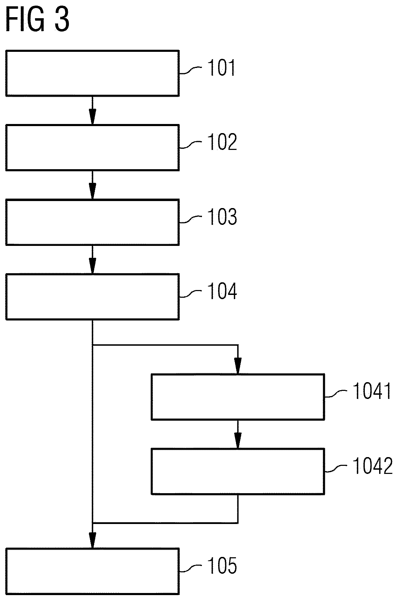

FIG 3 ist ein Flussdiagramm zur Erläuterung der erfindungsgemäßen Trainingsmethode, die es dem KI Kopiloten ermöglicht, zu lernen und seine Fähigkeit zur Unterstützung von Entwicklern zu verbessern, indem er Nutzungsmuster oder Nutzungssequenzen (entsprechend der Durchführung von Teilaufgaben) identifiziert und komplexe Arbeitsabläufe (entsprechend der Durchführung komplexer Aufgaben, die aus mehreren Teilaufgaben bestehen) innerhalb von Softwareanwendungen erkennt. Der grundlegende Ansatz besteht in der Erkennung von Nutzungsmustern oder der Nutzungsreihenfolge, d.h. in der Analyse der Sequenzen von API-Aufrufen, die von Client-Anwendungen zur Ausführung bestimmter Teilaufgaben vorgenommen werden. Diese Fähigkeit bildet die Grundlage, auf der fortgeschrittenere Funktionen wie die Erkennung komplexer Arbeitsabläufe aufgebaut werden.

Teilaufgaben im Kontext dieser Erfindung beziehen sich auf spezifische Operationen innerhalb einer Anwendung, die die Ausführung mehrerer API-Aufrufe in einer bestimmten Reihenfolge erfordern. Diese Unteraufgaben sind Bestandteile größerer Aufgaben und umfassen eine definierte Abfolge von API-Interaktionen, die ein bestimmtes, kleineres Ziel innerhalb des gesamten Anwendungsworkflows erreichen.

Nehmen wir zum Beispiel die Teilaufgabe der Benutzerauthentifizierung und Sitzungsinitialisierung in einer Anwendung. Diese Teilaufgabe könnte mehrere API-Aufrufe in der folgenden Reihenfolge umfassen:
Aufruf Endpunkt 1.1 - Benutzerauthentifizierung und Autorisierung: Im ersten Schritt werden die Anmeldedaten des Benutzers überprüft und der Zugriff auf das System gewährt.
Aufruf von Endpunkt 1.2 - Abrufen des Benutzerprofils: Nach der Authentifizierung ruft die Anwendung die Profildetails des Benutzers ab, um die Sitzung einzurichten.
Aufruf von Endpunkt 1.3 - Sitzung initialisieren: Die Sitzung wird auf der Grundlage des Benutzerprofils initialisiert, um die Anwendung auf die Interaktionen des Benutzers vorzubereiten.

Diese Abfolge von API-Aufrufen stellt ein Nutzungsmuster dar, da sie einen typischen Vorgang repräsentiert, der immer dann implementiert werden muss, wenn Benutzerauthentifizierung und Sitzungsverwaltung erforderlich sind. Der KI-Kopilot kann diese Sequenz als Teilaufgabe identifizieren und sie Entwicklern vorschlagen, wenn in einem neuen Projekt eine ähnliche Teilaufgabe zur Authentifizierung benötigt wird.

Aufgaben oder Workflows sind umfassendere Operationen, die aus mehreren Teilaufgaben bestehen, von denen jede eine eigene Abfolge von API-Aufrufen umfasst, die kombiniert werden, um ein größeres Ziel innerhalb der Anwendung zu erreichen. Ein Workflow integriert mehrere Teilaufgaben in einer bestimmten Reihenfolge oder Sequenz, um eine komplexe Aufgabe zu erledigen, die eine umfassendere Anwendungsfunktion erfüllt.

Betrachten wir den Abschluss eines Online-Kaufs als Beispiel für einen komplexen Workflow. Diese Aufgabe könnte die folgenden Teilaufgaben umfassen:
Teilaufgabe 1: Benutzerauthentifizierung und Sitzungsinitialisierung:
   Aufruf von Endpunkt 1.1 - Benutzerauthentifizierung und Autorisierung.
   Aufruf von Endpunkt 1.2 - Abrufen des Benutzerprofils.
   Endpunkt 1.3 aufrufen - Sitzung initialisieren.
Teilaufgabe 2: Produktauswahl und Warenkorbverwaltung:
   Aufruf von Endpunkt 2.1 - Suche nach Produkten: Der Benutzer sucht nach Produkten.
   Aufruf von Endpunkt 2.2 - Ein Produkt auswählen: Der Benutzer wählt ein Produkt aus den Suchergebnissen aus.
   Endpunkt 2.3 aufrufen - Produkt in den Warenkorb legen: Das ausgewählte Produkt wird in den Einkaufswagen gelegt.
Teilaufgabe 3: Zahlungsabwicklung und Abschluss der Bestellung:
   Aufruf von Endpunkt 3.1 - Zahlung verarbeiten: Die Zahlung für die Produkte im Warenkorb wird verarbeitet.
   Aufruf von Endpunkt 3.2 - Bestellung bestätigen: Die Bestellung wird bestätigt und abgeschlossen.
   Endpunkt 3.3 aufrufen - Quittung erstellen und Bestätigung senden: Es wird eine Quittung erstellt und eine Bestätigung an den Benutzer gesendet.

Jede dieser Teilaufgaben umfasst eine Reihe von API-Aufrufen und bildet in ihrer Abfolge den gesamten Arbeitsablauf, der zum Abschluss eines Kaufs erforderlich ist. Der Kl-Kopilot kann diesen Arbeitsablauf erkennen, indem er die Beziehungen und die Abfolge zwischen den verschiedenen Teilaufgaben mit ihrer jeweiligen Abfolge von API-Aufrufen identifiziert. Anschließend kann er den Entwicklern diesen gesamten Arbeitsablauf vorschlagen und so sicherstellen, dass alle erforderlichen API-Aufrufe in der richtigen Reihenfolge implementiert werden, um die Aufgabe zu erfüllen.

Die Schrittstruktur der oben beschriebenen konzeptionellen Methode kann wie folgt dargestellt werden. In einem ersten Schritt ruft der API-Monitor 600 die Informationen über die API-Aufrufe von der API ab (S101) und versieht die Informationen über die API-Aufrufe mit einem Zeitstempel (S102). Der API-Monitor kann dann die mit einem Zeitstempel versehenen API-Informationen im Datenspeichersystem 700 speichern (S103). Der verbesserte KI-Kopilot 800 wird dann anhand der im Datenspeichersystem 700 gespeicherten Daten trainiert (S104).

Ein erster Trainingsschritt (S1041) kann sich darauf beziehen, dass der Kopilot 800 mit zeitgestempelten API-Anrufdaten versorgt wird, um API-Anrufsequenzen zu lernen, die auf Teilaufgaben hinweisen. Die Kandidatensequenzen können sich bei der Interaktion mit einem einzelnen Client oder mit mehreren Clients wiederholen. Außerdem kann ein Zeitfenster für die Bestimmung der Sequenzen von API-Aufrufen berücksichtigt werden. Wenn die Zeitfenster zwischen den API-Aufrufen fast gleich sind, kann die Abfolge der API-Aufrufe als Kandidatensequenz betrachtet werden. Alle diese gelernten Sequenzen können dann auch im Datenspeichersystem 700 gespeichert werden.

Ein zweiter Trainingsschritt (S1042) kann optional durchgeführt werden, indem dem Kopiloten die gespeicherten gelernten Sequenzen zur Verfügung gestellt werden, um Sequenzen von Sequenzen zu lernen, die auf komplexe Arbeitsabläufe oder Aufgaben hinweisen würden. Die Auswahl der Kandidatensequenzen kann in ähnlicher Weise wie oben dargestellt erfolgen, wobei die Kandidatensequenzen sich in der Interaktion mit einem einzelnen Kunden oder mit mehreren Kunden wiederholen können. Darüber hinaus kann auch ein Zeitfenster für die Bestimmung von Sequenzen berücksichtigt werden. Wenn die Zeitfenster zwischen den Sequenzen fast gleich sind, kann die aufgerufene Sequenz als Kandidatensequenz betrachtet werden. Alle diese gelernten Sequenzen von Nutzungssequenzen können dann auch im Data Storage 700 gespeichert werden. Interessanterweise ermöglicht dieser Ansatz das Erlernen komplexer Arbeitsabläufe, deren API-Aufrufe über verschiedene Anwendungen verteilt sind.

Die Trainingsschritte können in regelmäßigen Abständen mit den neuen Daten wiederholt werden, um den Copiloten weiter zu verbessern.

In einem letzten Schritt (S105) wird eine neue API-Anwendung in einer Entwicklungsumgebung entwickelt, in der der KI-Copilot und die erlernten Nutzungssequenzen und/oder Arbeitsabläufe verwendet werden, um dem Benutzer, der den Code schreibt, Empfehlungen zu geben.

Zusammenfassend lässt sich sagen, dass die vorliegende Erfindung eine leistungsstarke Lösung für die Herausforderungen der API-Integration in der Softwareentwicklung bietet. Durch den innovativen Einsatz eines API-Monitors, eines Datenspeichersystems und eines Klbasierten Copiloten kann sie Entwicklern in Echtzeit kontextsensitive Hilfestellung geben und den Prozess der Nutzung von APIs schneller, einfacher und zuverlässiger machen. Die kontinuierliche Lernfähigkeit der KI sorgt dafür, dass der Copilot mit den neuesten API-Nutzungsmustern und Arbeitsabläufen auf dem Laufenden bleibt, was ihn zu einem unschätzbaren Werkzeug für die moderne Softwareentwicklung macht.

## Patentansprüche

1. Computerimplementiertes Verfahren zur Unterstützung von Softwareentwicklern bei der Kodierung innerhalb einer Entwicklungsumgebung zur Kodierung einer Anwendung unter Verwendung von externen Anwendungsprogrammierschnittstellen, API, umfassend:
Abrufen (S101) von API-Aufrufdaten durch einen API-Monitor (600), die sich auf API-Aufrufe beziehen, die von einem Client (300) an einen oder mehrere API-Endpunkte (401) einer oder mehrerer APIs (400) gemacht wurden;
Zeitstempeln (S102) jedes API-Aufrufs in den abgerufenen API-Aufrufdaten durch den API-Monitor (600);
Speichern (S103) der mit einem Zeitstempel versehenen API-Aufrufdaten in einem Datenspeichersystem (700);
Trainieren (S104) eines Künstliche Intelligenz, Kl-, Kopilot en (800) unter Verwendung der in dem Datenspeichersystem (700) gespeicherten Daten;
Verwendung (S105) des trainierten Kl-Kopiloten (800) in einer Entwicklungsumgebung (100), um dem Benutzer Vorschläge für den Entwurf von Code für eine neue Anwendung zu machen.

2. Verfahren nach Anspruch 1, wobei der Trainingsschritt (S104) einen ersten Trainingsschritt (S1041) umfasst, der darin besteht, dem KI-Kopiloten (800) die mit Zeitstempeln versehenen API-Aufrufdaten aus dem Datenspeichersystem (700) zur Verfügung zu stellen, um Nutzungssequenzen von API-Endpunktaufrufen zu lernen, die Teilaufgaben anzeigen, und die gelernten Nutzungssequenzen im Datenspeichersystem (700) zu speichern.

3. Verfahren nach Anspruch 2, wobei die Nutzungssequenzen Sequenzen von API-Endpunktaufrufen sind, die sich in der Interaktion mit einem einzelnen Client oder mit mehreren Clients wiederholen.

4. Verfahren nach einem der Ansprüche 2 oder 3, wobei eine Sequenz von API-Endpunktaufrufen nur dann als Nutzungssequenz bestimmt wird, wenn die Zeitfenster zwischen den API-Aufrufen verschiedener Vorkommnisse der Nutzungssequenz im Wesentlichen gleich sind.

5. Verfahren nach einem der Ansprüche 2 bis 4, wobei der Schritt des Trainings (S104) ferner einen zweiten Trainingsschritt (S1042) umfasst, der darin besteht, dem KI-Kopiloten (800) die gespeicherten gelernten Nutzungssequenzen aus dem Datenspeichersystem (700) zur Verfügung zu stellen, um Sequenzen von Nutzungssequenzen zu lernen, die auf komplexe Arbeitsabläufe oder Aufgaben hinweisen.

6. Verfahren nach Anspruch 5, wobei die Sequenzen von Nutzungssequenzen Nutzungssequenzen sind, die sich in der Interaktion mit einem einzelnen Client oder mit mehreren Clients wiederholen.

7. Verfahren nach einem der Ansprüche 5 oder 6, wobei eine Sequenz von Nutzungssequenzen nur dann als eine Sequenz von Nutzungssequenzen bestimmt wird, wenn die Zeitfenster zwischen verschiedenen Vorkommnissen der Sequenz von Nutzungssequenzen im Wesentlichen gleich sind.

8. Verfahren nach einem der vorhergehenden Ansprüche, wobei das Training nach einer vorbestimmten Dauer unter Verwendung von API-Aufrufdaten und/oder Nutzungssequenzen, die in dem Datenspeichersystem (700) zwischen dem letzten Training und der vorbestimmten Dauer gespeichert wurden, periodisch erneut durchgeführt wird.

9. Verfahren nach einem der vorhergehenden Ansprüche, wobei der KI-Copilot (800) so konfiguriert ist, dass er sich in mehrere Entwicklungsumgebungen (100) integrieren und seine Vorschläge an eine bestimmte verwendete Programmiersprache anpassen kann.

10. Ein Anwendungsprogrammierschnittstellen-, API-, Server (200), der ein API-Gateway (500) und mindestens eine API (400) umfasst, die eine Vielzahl von aufrufbaren API-Endpunkten (401) umfasst, wobei der Server (200) ferner umfasst:
- einen API-Monitor (600), der so konfiguriert ist, dass er API-Aufrufdaten abruft, die sich auf API-Aufrufe beziehen, die von einem Client (300) an einen oder mehrere API-Endpunkte (401) einer oder mehrerer API (400) getätigt wurden, um jeden API-Aufruf in den abgerufenen API-Aufrufdaten mit einem Zeitstempel zu versehen und die mit einem Zeitstempel versehenen API-Aufrufdaten an einen Datenspeichersystem (700) zu senden;
- das Datenspeichersystem (700), das so konfiguriert ist, dass es die empfangenen mit Zeitstempeln versehenen API-Aufrufdaten speichert;
- einen Künstliche Intelligenz, Kl-, Kopilot en (800), der so konfiguriert ist, dass er unter Verwendung der in dem Datenspeichersystem (700) gespeicherten Daten trainiert wird und in einer Entwicklungsumgebung (100) verwendet werden kann, um dem Benutzer Vorschläge für den Entwurf von Code für eine neue Anwendung zu machen.

11. Server (200) nach Anspruch 10, wobei
- der Kl-Kopilot (800) ferner so konfiguriert ist, dass er ein erstes Training durchführt, bei dem den KI-Kopiloten die mit Zeitstempeln versehenen API-Aufrufe aus dem Datenspeichersystem (700) zur Verfügung gestellt werden, um Nutzungssequenzen von API-Endpunktaufrufen zu lernen, die Teilaufgaben anzeigen, und die gelernten Nutzungssequenzen in dem Datenspeichersystem (700) zu speichern, und
- das Datenspeichersystem (700) ist ferner so konfiguriert, dass es die gelernten Nutzungssequenzen empfängt und speichert.

12. Server (200) nach Anspruch 11, wobei die Nutzungssequenzen Sequenzen von API-Endpunktaufrufen sind, die sich in der Interaktion mit einem einzelnen Client oder mit mehreren Clients wiederholen, und/oder wobei eine Sequenz von API-Endpunktaufrufen nur dann als Nutzungssequenz bestimmt wird, wenn die Zeitfenster zwischen den API-Aufrufen verschiedener Vorkommnisse der Nutzungssequenz im Wesentlich gleich sind.

13. Server (200) nach einem der Ansprüche 11 oder 12, wobei
- der Kl-Kopilot ferner so konfiguriert ist, dass er ein zweites Training durchführt, bei dem den KI-Kopiloten die gespeicherten gelernten Nutzungssequenzen aus dem Datenspeichersystem (700) zur Verfügung gestellt werden, um Sequenzen von Nutzungssequenzen zu lernen, die auf komplexe Arbeitsabläufe oder Aufgaben hinweisen, und
- das Datenspeichersystem (700) weiterhin so konfiguriert ist, dass es die gelernten Sequenzen von Nutzungssequenzen empfängt und speichert.

14. Server (200) nach Anspruch 13, wobei die Sequenzen von Nutzungssequenzen Nutzungssequenzen sind, die sich in der Interaktion mit einem einzelnen Client oder mit mehreren Clients wiederholen, und/oder wobei eine Sequenz von Nutzungssequenzen nur dann als eine Sequenz von Nutzungssequenzen bestimmt wird, wenn die Zeitfenster zwischen verschiedenen Vorkommnissen der Sequenz von Nutzungssequenzen im Wesentlichen gleich sind.

15. Server (200) nach einem der vorhergehenden Ansprüche 10 bis 14, wobei der Kl-Kopilot (800) ferner so konfiguriert ist, dass er das Training nach einer vorbestimmten Dauer unter Verwendung von API-Aufrufdaten und/oder Nutzungssequenzen, die im Datenspeichersystem (700) zwischen dem letzten Training und der vorbestimmten Dauer gespeichert wurden, periodisch erneut durchführt.
